# EUROPEAN PATENT APPLICATION

(11) **EP 3 896 667 A1**
(43) Date of publication of application: **20.10.2021**
(21) Application number: 21168244.8
(22) Date of filing: 14.04.2021
(51) Int. Cl.: G08C 17/02, A45C 11/00, H04B 1/3888, H04M 1/72415, G07C 9/00

(54) **IMPROVED DEVICE FOR THE REMOTE CONTROL OF A UTILITY**

(30) Priority: 15.04.2020 IT 202000007984
(71) Applicant: Teleco Automation S.R.L., 31100 Treviso (IT)
(72) Inventor: BORSOI, Luigi, 31012 CAPPELLA MAGGIORE (TV) (IT); COLLOVINI, Roberto, 31100 TREVISO (IT)
(74) Representative: Braidotti, Andrea

(57) **Abstract**

Interface device (2) between a smartphone (20) and the control unit (12) of a utility (30), to remotely control said utility (30) by acting on said smartphone (20), characterized in that it comprises:
- a cover element (28) which is shaped as a removable protective cover for said smartphone (20), and
- an electronic apparatus (11) which is integrated or housed in said cover element (28) and which comprises:
- first Bluetooth communication means (8), preferably BLE, configured to communicate with third Bluetooth communication means (22) preferably BLE, of the smartphone (20), and
- second communication means (10) configured to communicate with fourth communication means (14) provided in said control unit (12),
- a first command and control unit (4) which is configured so as to manage said first Bluetooth communication means (8) and said second communication means (10), to process a first signal (21) transmitted by said third communication means Bluetooth communication (22), preferably BLE, of said smartphone (20) to said first communication means (8) and to generate as a function of said first signal (21) a second signal (23) to be sent by said second communication means (10) to said fourth communication means (14) of said control unit (12) for controlling said utility (30).

## Description

The present invention relates to an interface device between a smartphone and the control unit of a utility for remotely controlling said utility by acting on said smartphone.

The use of a traditional radio control is known to automatically remotely control a utility, in particular a barrier (gate, bar, door, etc.).

The use of a portable electronic device, such as a smartphone, tablet or computer, which is equipped with a dedicated APP, is also known to automatically remotely control a utility. In particular, the APP installed and executed in the portable electronic device (which hereinafter will be considered for the sake of brevity a smartphone, even if the invention is not to be considered limited to this) is configured to display on the device's display an image of a radio control device, with keys that can be digitized by touching the user's finger on the display itself, in order to generate and send the appropriate activation commands directly to the utility control unit.

These commands are sent from the smartphone directly to the control unit via Bluetooth or via Wi-Fi. In the first case, the distance from which it is possible to control the activation of the barrier is rather limited, given the limited range of the Bluetooth transmission system, which is generally of the order of a few tens of meters.

In the second case it is possible to reach greater distances, but the barrier control unit must belong to a Wi-Fi network and therefore requires the use of a Wi-Fi system.

Furthermore, in both cases dedicated devices are required, with problems of costs and complex and burdensome installations.

WO2019/130177 describes a remote control method of a home automation component which provides for the use of a card to be positioned in the vicinity of an electronic device, such as a smartphone. In particular, the card is equipped with NFC/RFID communication means for communication with the smartphone, and a radio transmitter which is tuned to a frequency dedicated to the home automation component. The method involves inducing the transmission, by the radio transmitter of the card, of a control signal to the home automation component following the reception of a command signal that the card receives from the smartphone through an NFC/RFID communication between the card and the smartphone.

The object of the invention is to propose an interface device between a smartphone and the control unit of a utility, to remotely control the utility by acting on the smartphone, which is able to overcome - at least in part - the drawbacks of the known solutions.

Another object of the invention is to propose a device that allows to transform a traditional smartphone into a remote control.

Another object of the invention is to propose a device that can be easily and quickly applied and associated with a smartphone of any type, even of different models and manufacturers.

Another object of the invention is to propose a device which is particularly efficient from the point of view of electricity consumption.

Another object of the invention is to propose a device of limited and optimal overall dimensions.

Another object of the invention is to propose a device that allows to remotely control a utility on the basis of specific commands received from a smartphone.

Another object of the invention is to propose a device that can communicate with a utility from great distances.

Another object of the invention is to propose a device which is simple and intuitive to use.

Another object of the invention is to propose a device that can communicate with a utility in a safe manner.

Another object of the invention is to propose a device that can be distributed on a large scale.

Another object of the invention is to propose a device which allows a thorough and accurate control of the utility.

Another object of the invention is to propose a device which is an improvement and/or alternative to the traditional ones.

Another object of the invention is to propose a device which can be obtained simply, quickly and with low costs.

All these purposes, both individually and in any combination thereof, and others that will result from the following description, are achieved, according to the invention, with a device for controlling a utility with the characteristics indicated in claim 1, with a kit for the control of a utility with the characteristics indicated in claim 12 and with an infrastructure with the characteristics indicated in claim 15.

The present invention is further clarified hereinafter in some of its preferred embodiments given purely by way of example and non-limiting with reference to the attached drawing tables, in which:

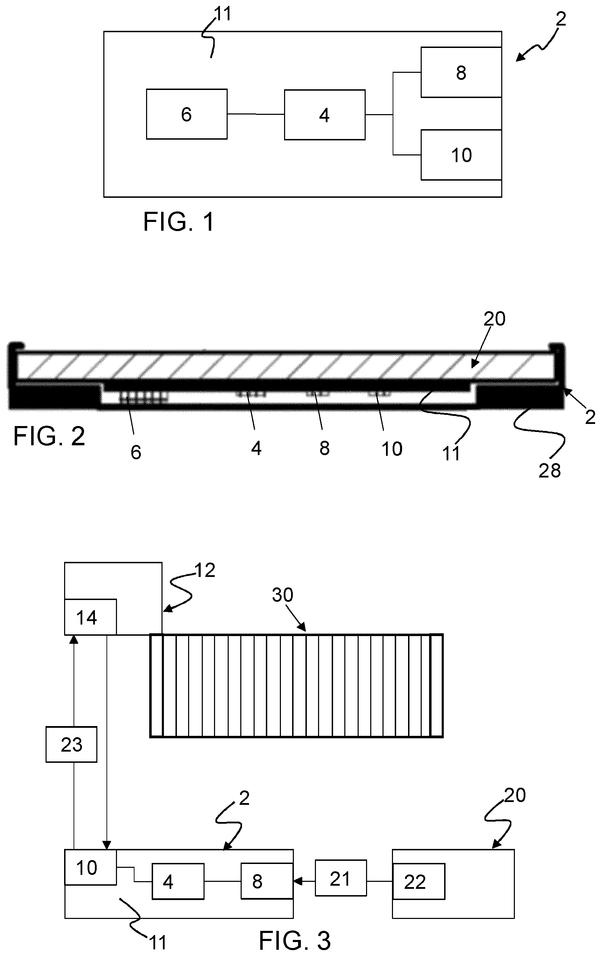

- Figure 1: shows a schematic view of the device according to the invention,
- Figure 2: shows it in lateral section applied to a smartphone, and
- Figure 3: shows a schematic view of the infrastructure that uses the device according to the invention.

The invention relates to an interface device 2 between a smartphone and the control unit 12 of a utility, for remotely controlling the utility by acting on the smartphone. In particular, said interface device 2 is configured to be associated with a smartphone 20, preferably equipped with a touch-screen, in order to remotely control, on the basis of a signal received from said smartphone, a control unit 12 associated with a utility, for example to a mobile barrier 30.

Conveniently, the device 2 comprises a cover element 28 of the removable type to cover, at least partially, the smartphone 20. In particular, the cover element 28 is a removable shell to cover the rear part of the smartphone 20. Preferably, the cover element 28 is shaped as a removable protective cover for a smartphone. Conveniently, the cover element 28 is configured to wrap the rear part and also the edges of the smartphone 20. Conveniently, the device 2 comprises a cover element 28 of a removable type to cover, at least partially, the smartphone 20. In particular, the cover element 28 is a removable shell to cover the rear part of the smartphone 20. Preferably, the cover element 28 is shaped like a traditional removable protective cover for a smartphone. Conveniently, the cover element 28 is configured to hook onto the edges and corners of the smartphone 20.

Conveniently, the outer rear surface of the cover element 28 can be decorated and personalized.

Conveniently, the cover element 28 is made of polymeric material, for example of rubber or silicone or thermoplastic polyurethane or polycarbonate. Conveniently, the cover element 28 can be of rigid material or of soft and flexible material, pliable, elastically deformable and impact resistant. Conveniently, the cover element 28 can also be made of composite material, i.e. part in more rigid polymeric material and part in softer polymeric material.

Conveniently, the cover element 28 - with which the device 2 is provided - keeps the device itself stably in proximity to, and preferably in contact with, the smartphone 20.

The cover element 28 preferably has a substantially laminar shape, in which i.e. the thickness is much less than the other two dimensions (i.e. length and width).

Conveniently, the device 2 comprises an electronic apparatus 11 which is integrated or housed in the cover element 28. Conveniently, in a possible embodiment, the electronic apparatus 11 is entirely housed within the thickness of the cover element 28.

Conveniently, in a possible embodiment, the electronic apparatus 11 is housed in a seat obtained in the cover element 28. Preferably, said seat is accessible at the internal surface of the cover element 28, i.e. the intended surface to come into contact with the rear wall of the smartphone 20. Preferably, but not necessarily, said seat can be closed by a corresponding portion which can be opened or removed, at least partially, in order to thus be able to access the electronic apparatus 11.

Conveniently, in a possible embodiment, said electronic apparatus 11 is housed in a housing cavity obtained in the cover element 28.

Conveniently, in a possible embodiment, said electronic apparatus 11 can be embedded inside the cover element 28.

Conveniently, in a possible embodiment, said electronic apparatus 11 is integrated and housed in correspondence with the internal surface of the cover element 28 which is intended to come into contact with the rear wall of the smartphone 20.

The electronic apparatus 11 of the device 2 comprises:
- a first command and control unit 4,
- first communication means with Bluetooth technology 8 for communication with third parties communication means with Bluetooth technology 22 of the smartphone 20, and
- second communication means 10 for transmitting radio frequency signals to fourth communication means 14 provided in said control unit 12.

The first command and control unit 4 is configured so as to manage said first Bluetooth communication means 8 and said second communication means 10, to process a first signal 21 transmitted by said third Bluetooth communication means 22 of said smartphone 20 to said first Bluetooth communication means 8 and to generate as a function of said first signal 21 a second signal 23 to be sent by said second communication means 10 to said fourth communication means 14 of said control unit 12 for controlling said utility 30.

Conveniently, the aforementioned components of the electronic apparatus 11 can be mounted on the same printed electrical circuit or on two or more printed electrical circuits mutually electrically connected.

The electronic apparatus 11 of the device 2 comprises a first command and control unit 4 which allows its functions to be controlled as will become clearer hereinafter. Conveniently, the first command and control unit 4 comprises a microprocessor or microcontroller, preferably mounted on a printed circuit. Conveniently, the electronic apparatus 11 of the device 2 may also comprise an electrical power supply unit 6.

In a preferred embodiment of the electronic apparatus 11, the power supply unit 6 may comprise an electrical energy storage element, such as a battery, or a supercapacitor. In a preferred embodiment, the power supply unit 6 can be configured to receive energy from the outside. Advantageously, in a preferred embodiment, the electronic apparatus 11 comprises an *"energy harvesting"* circuit, which is configured to convert the electromagnetic emissions of the smartphone into electrical energy, to thus charge the power supply unit 6 (if provided) and/or to feed the components of said apparatus on the base.

Conveniently, in a preferred embodiment, when the power supply unit 6 is in a condition of receiving electrical energy from the outside, this can be used to recharge the energy storage element and also to operate the device 2, while when the power supply unit 6 is not in a position to receive electrical energy from the outside, the device 2 can operate thanks to the energy stored inside the energy storage element.

Conveniently, the electronic apparatus 11 of the device 2 can comprise first communication means with Bluetooth technology 8 which are configured to ensure communication with the smartphone 20, as will be clear later. Preferably, the first Bluetooth 8 communication media use the "Bluetooth Low Energy" technology, also called "BLE". Conveniently, the first Bluetooth communication means 8 comprise a corresponding Bluetooth reception or transceiver antenna, preferably a BLE reception or transceiver antenna.

These first Bluetooth communication means 8 can be mounted on the same printed circuit as the first command and control unit 4, or they can be mounted on a separate circuit, electrically connected with the first control unit 4.

Conveniently, the electronic apparatus 11 of the device 2 does not in any way include communication means using NFC or RFID technology.

Conveniently, the smartphone 20 comprises a second command and control unit 24. Conveniently, the smartphone 20 is equipped with corresponding third communication means 22 which use Bluetooth technology and which are configured to communicate with the device 2, and in particular with said devices. first Bluetooth communication means 8. Preferably, the third Bluetooth communication means 22 use the "Bluetooth Low Energy" technology, also called "BLE". Conveniently, the third Bluetooth communication means 22 comprise a corresponding Bluetooth receiving or transmitting antenna, preferably a BLE receiving or transmitting antenna.

Conveniently, the electronic apparatus 11 and therefore the Bluetooth transmission means - and preferably BLE - are integrated in the cover element 28 which acts as a cover of the smartphone 20 and which, as such, is and always remains in proximity to and/or contact with the smartphone itself. In essence, the smartphone 20 and the interface device 2, which acts as a cover for the smartphone itself, mechanically/structurally define a single integrated assembly in which, in particular, the device 2 allows the smartphone 20 to be used as a remote control for a certain utilities.

Advantageously, said electronic apparatus 11 can also comprise additional communication means (not shown) for transmitting/receiving data via cable. In particular, these means comprise a suitable port which allows a connection of said device 2 by means of an electric cable, such as for example a USB cable, for the transmission/reception of data with said device 2 (for example between the latter and said device 20) or for the electrical power supply/recharge of the device itself.

Furthermore, advantageously, the device 2 can be configured to receive the electrical energy necessary for its operation from the smartphone 20, and in particular for example from its battery, also by means of suitable electromagnetic induction circuits present in said device 2, corresponding to suitable electromagnetic induction circuits present in the smartphone 20.

Advantageously, the electronic apparatus 11 of the device 2 can comprise second communication means 10 configured to allow communication with a control unit 12. Conveniently said second communication means 10 can be mounted on the same printed circuit of the first command and control unit 4 or they can be mounted on a separate circuit, electrically connected with the first control unit 4.

These second communication means 10 can be configured only to transmit signals or they can be configured to transmit and receive signals. These second communication means 10 are configured to transmit/receive radio frequency signals only. They can be configured to transmit/receive radiofrequency signals, preferably of the VHF or UHF type and can advantageously operate in analog and/or digital modulation and with protocols such as, for example, of the FSK, GFSK, MSK, GMSK, LoRa type, etc.

Conveniently, the second communication means 10 can be configured to transmit signals at a fixed frequency, for example 433/868/916 MHz.

Advantageously, the second communication means 10 are configured to use different frequencies and/or protocols than those used by the first communication means 8.

Conveniently, the second communication means 10 do not use NFC or RFID technology. Conveniently, moreover, the second communication means 10 do not use the Bluetooth technology - and preferably BLE - which is instead used by the first communication means 8 of the device 2 with the smartphone 20.

Conveniently, in a traditional way, the smartphone 20 can comprise some communication means through cables, such as a USB port (or alternatively micro USB, or mini USB, or type C), or FireWire.

Advantageously, a suitable software module can be loaded and executed in the smartphone 20, and in particular in the second command and control unit 24, which preferably can be a native mobile software application, also known as APP. It can be configured to generate at least one suitable screen on the smartphone display 20 in order to allow the user to select in an easy and intuitive manner a command to be sent to the control unit 30 through the device 2.

In particular, said software module is configured in so that, on the basis of inputs entered by the user by acting on said smartphone 20, it generates at least a corresponding first signal 21 to be transmitted by means of said third Bluetooth communication means 22 to the first Bluetooth communication means 22 of said device 2 so that said first communication unit command and control 4 of said device 2 thus generates, as a function of said first signal 21, a second signal 23 to be sent by said second communication means 10 to said fourth communication means 14 of said control unit 12 for the control of said utility 30.

Conveniently, said software module contains a plurality of second predefined signals 23 and, among these, at least one second signal 23 is selected to be sent to the control unit 12 on the basis of the first signal 21 received.

Conveniently, moreover, said APP can be configured to display information relating to the device 2 and/or to the control unit 12 and/or to the mobile barrier 30, to which the control unit is connected. For example, the APP can be configured to display one or more of the following information:
- status of device 2, for example battery charge status, or any malfunctions or other,
- control unit status 12,
- distance between device 2 (and therefore smartphone 20) and control unit 12,
- state of barrier 30, to which the control unit 12 is connected: for example if said barrier is open or closed, or if there are any malfunctions, or other.

Conveniently, the APP can be configured to receive a plurality of inputs from a user in order to control the device 2 via the smartphone 20, and in particular the first command and control unit 4 of said device. Preferably, said inputs can be associated with appropriate actions of the user on the touch-screen of the smartphone 20, or they can be linked to the pressure of one or more physical keys present on the smartphone 20. Advantageously, said inputs can be transmitted from the smartphone 20 to the device 2 in the form of first signals 21 by means of the Bluetooth communication between said third means (22) and said first means 8.

In a possible and preferred embodiment, both the device 2, and in particular its first Bluetooth communication means 8, that the smartphone 20, and in particular its third Bluetooth communication means 22, can be configured so that the device 2 is associated with the smartphone 20 both on its front side, that is, it is applied to its portion presenting the screen, and on the its opposite side, i.e. it is applied to its portion not presenting the screen, so as to allow their integration with cover element s 28 of different types.

Conveniently, the control unit 12 can be installed in correspondence with a motorized mobile barrier 30. For example, this mobile barrier can be a gate, a bar or the shutter of a garage, or any other type of motorized mobile barrier that allows access to a specific space and that can be remotely controlled.

Conveniently, the control unit 12 can be configured to control the operation of the motor connected to the mobile barrier 30 and therefore to control its opening and closing, in a different form the control unit 12 could be an ON/OFF control of a light or of other remote devices.

The control unit 12 can also comprise fourth communication means 14, configured to communicate with the second communication means 10 of the device 2, thus allowing the control unit itself to receive suitable second signals 23 which allow to control the movement of the mobile barrier 30 and/or to send to device 2 appropriate information relating to the status of the control unit itself and/or of the mobile barrier 30 and/or of another utility.

The fourth communication means 14, which interface with the second means 10 of the device 2, are configured to transmit/receive only radiofrequency signals. In a possible embodiment, the fourth communication means 14 can be configured to use in transmission frequencies and/or protocols different from those used in transmission by the second communication means 10.

Conveniently the third Bluetooth communication means 22 of the smartphone 20 they are unable to communicate directly with the fourth communication means 14 of the control unit 12 in order to prevent possible interference between them.

The operation of the solution according to the invention clearly results from what has been said previously.

If it is necessary to move the mobile barrier 30, a user in possession of the smartphone 20, to which the device 2 is associated, can act on the smartphone itself - which thus acts as a remote control - in order to control the desired movement. Furthermore, the user can access the APP in order, for example, to view the status of the control unit 12 and/or the mobile barrier 30 and to verify that they are operational and/or functioning. Furthermore, it can check, again through the APP, if the control unit 12 is within the range of action of the device 2 and in particular if the second communication means 10 and the fourth communication means 14 are at a suitable distance to allow communication.

Furthermore, by means of an appropriate maneuver on the smartphone 20, the user can send through the third Bluetooth communication means 22 a first signal 21 from the smartphone 20 to the device 2, which is able to receive it by means of the first Bluetooth communication means 8. Subsequently the device 2, and in particular its first command and control unit 4 can be configured to process said first signal 21 and generate a corresponding second signal 23. Furthermore, the device 2 is configured to send, by means of the second communication means 10, this second signal 23 (or other signal generated starting from or on the basis of said second signal 23) to the control unit 12, in order to control the movement of the mobile barrier 30.

Advantageously, if the control unit 12 does not find within the range of action of the device 2 (and in particular of the second communication means 10), the command - deriving from the reception of the first signal 21 and/or from the generation of the second signal 23 - can be stored by the APP in the smartphone 20 and/or in the device 2, and can be sent by the second communication means 10 when the control unit 12 has entered the range of action of the device 2. In this case, a notification can conveniently be displayed on the device 2 to warn the user accordingly.

The present invention also relates to a kit for remote control of a utility comprising an interface device 2 as described above and a smartphone 20 configured to be associated with said device 2 and comprising third Bluetooth communication means 22 configured to communicate with said first Bluetooth communication means 8 present in said device 2, and in particular for sending said first signal 21 to said device 2. Conveniently, the kit also comprises a software module, preferably an APP - as described above - loaded and/or executed in the smartphone 20.

The present invention also relates to an infrastructure 1 characterized in that it comprises:
- a kit as described above,
- a mobile barrier 30 or other utility to be controlled,
- a control unit 12 configured to control the movement of said mobile barrier or other utility on the basis of said second signal 23 sent by said device 2 on the basis of said first signal 21 received by said smartphone 20.

As it is clear from what has been said, the second device the invention is quite advantageous as it allows to achieve all the stated aims and in particular:
- it can be easily and quickly associated with a widely used device such as a smartphone, thus transforming the latter into a remote control,
- it is suitable for use with any type of smartphone,
- it is not bulky,
- allows to communicate almost universally with different control units,
- it allows long-range communication with these control units, limiting the utility's waiting times.

The fact that the device 2 according to the invention uses Bluetooth technology for communication with the smartphone 20, replacing the NFC technology provided in traditional solutions (such as the solution described in WO2019/130177), is particularly advantageous as it allows to avoid the drawbacks deriving from the characteristics of the antennas required in communication with NFC technology. In particular, in fact, the NFC communication technology requires positioning the corresponding transmission/reception antennas in close proximity and substantially opposite each other; therefore, in order to communicate via NFC with the smartphone, a corresponding NFC coupling antenna should necessarily be in a facing position and in correspondence with the antenna provided in the smartphone. Considering that, among the various smartphone models of the same manufacturer or of different manufacturers, the NFC antenna is located in different positions within (the laminar development) of the smartphone itself (and this also in order not to interfere with the position of the camera), a possible coupling antenna provided in the device to be interfaced via NFC with the smartphone, should be particularly large/bulky or should be in the interface device in a different position depending on the smartphone model, thus leading to various types of interface devices, one for each smartphone model. Advantageously, the use in the device 2 according to the invention of the Bluetooth technology for communication with the smartphone 20, and not of the NFC technology, allows the above drawbacks to be overcome; in particular, the Bluetooth antenna - and preferably BLE - for communication with the corresponding Bluetooth antenna - and preferably BLE - of the smartphone 20 can be in any position within the laminar development of the interface device 2, and more in detail of the cover element 28, since the antennas do not necessarily have to face each other.

Furthermore, by not using NFC communication technology, the device 2 according to the invention allows to reduce the consumption of electricity caused by the fact that the NFC module of smartphones (in particular those using the Android operating system) automatically searches at intervals the presence of devices with which to communicate via NFC are particularly close together. Advantageously, the device 2 according to the invention, not using the NFC communication technology, also allows to avoid frequently disturbing the operator who manages the smartphone with corresponding NFC connection requests of the smartphone itself with the device 2. In particular, suitably, the use of Bluetooth technology - and preferably BLE - for the communication of the smartphone 20 with the device 2 requires the smartphone to search for devices with which to communicate via Bluetooth - and preferably BLE - only when the operator sets/commands on the smartphone a corresponding request.

The present invention has been illustrated and described in some of its preferred embodiments, but it is understood that executive variations may be applied to them in practice, without however departing from the scope of protection of the present patent for industrial invention.

## Claims

1. Interface device (2) between a smartphone (20) and the control unit (12) of a utility (30), to remotely control said utility (30) by acting on said smartphone (20), **characterized in that** it comprises:
- a cover element (28) which is shaped as a removable protective cover for said smartphone (20), and
- an electronic apparatus (11) which is integrated or housed in said cover element (28) and which comprises:
- first Bluetooth communication means (8), preferably BLE, configured to communicate with third Bluetooth communication means (22) preferably BLE, of the smartphone (20), and
- second communication means (10) configured to communicate with fourth communication means (14) provided in said control unit (12),
- a first command and control unit (4) which is configured so as to manage said first Bluetooth communication means (8) and said second communication means (10), to process a first signal (21) transmitted by said third communication means Bluetooth communication (22), preferably BLE, of said smartphone (20) to said first communication means (8) and to generate as a function of said first signal (21) a second signal (23) to be sent by said second communication means (10) to said fourth communication means (14) of said control unit (12) for controlling said utility (30).

2. Device according to the preceding claim **characterized in that** said electronic apparatus (11) also comprises an electric power supply unit (6) for the components of said electronic apparatus (11).

3. Device according to the preceding claim, **characterized in that** said power supply unit (6) comprises an energy storage element, preferably a battery.

4. Device according to one or more of the preceding claims, **characterized in that** it comprises an *"energy harvesting"* circuit which is configured to convert the electromagnetic emissions of the smartphone into electrical energy, to thus recharge an energy storage element and/or to power directly the components of the electronic apparatus (11).

5. Device according to one or more of the preceding claims **characterized in that** said second communication means (10) are configured to transmit/receive radiofrequency signals, preferably of the VHF or UHF type and at a wavelength of approximately 433/868/916 MHz.

6. Device according to one or more of the preceding claims, **characterized in that** said cover element (28) comprises a removable shell which is configured to cover the rear part of the smartphone (20) and to attach to the edges and/or corners of the smartphone (20).

7. Device according to one or more of the preceding claims, **characterized in that** said cover element (28) is made of polymeric material.

8. Device according to one or more of the preceding claims, **characterized in that** the electronic apparatus (11) is entirely housed or integrated within the thickness of the cover element (28).

9. Device according to one or more of the preceding claims, **characterized in that** the electronic apparatus (11) is removably housed inside a seat formed in the cover element (28).

10. Device according to one or more of the preceding claims, **characterized in that** the electronic apparatus (11) is embedded inside the cover element (28) made of polymeric material.

11. Device according to one or more of the preceding claims, **characterized by** the fact that said electronic apparatus (11) does not comprise NFC communication means and by the fact that said first Bluetooth communication means (8) and said second communication means (10) are different between them.

12. Utility control kit (30) comprising:
- an interface device (2) according to one or more of the preceding claims, and
- a smartphone (20) configured to be associated with said device (2) and comprising third Bluetooth communication means (22) configured to communicate with said first Bluetooth communication means (8) present in said device (2), and in particular for sending said first signal (21) to said device (2).

13. Kit according to the preceding claim, **characterized in that** a software module is loaded and executed on said smartphone (20) which is configured so that, on the basis of inputs entered by the user by acting on said smartphone (20), it generates at least one corresponding first signal (21) to be transmitted by said third Bluetooth communication means (22) to the first Bluetooth communication means (22) of said device (2) so that said first command and control unit (4) of said device (2) generates thus, as a function of said first signal (21), a second signal (23) to be sent by said second communication means (10) to said fourth communication means (14) of said control unit (12) for the control of said utility (30).

14. Kit according to claims 12 or 13, **characterized in that** said software module is configured to display on said smartphone (20) information relating to the device (2) and/or to the control unit (12) and/or to the utility (30) at the which the control unit is connected to.

15. Infrastructure (1) **characterized by** the fact of including:
- a kit according to one or more of claims 12-14,
- a mobile barrier (30) or other utility to be controlled,
- a control unit (12) configured to control the movement of said mobile barrier, or of other utilities, on the basis of said second signal (23) sent by said interface device (2) on the basis of said first signal (21) received by said smartphone (20).
